**Europäisches Patentamt**

**European Patent Office**

**Office européen des brevets**

(10)

(11) Publication number: **0 115 666**
**B1**

# (12) EUROPEAN PATENT SPECIFICATION

(45) Date of publication of patent specification: **02.05.90**

(21) Application number: **83305435.6**

(22) Date of filing: **15.09.83**

(60) Divisional application **88119198.5** filed on **15/09/83.**

(51) Int. Cl.⁵: **G 11 B 7/08, G 11 B 7/09, G 11 B 13/04, G 11 B 11/10**

(54) **Optical focus position control in optical disc apparatus.**

(30) Priority: **25.01.83 JP 11037/83**
**18.04.83 JP 68770/83**
**19.04.83 JP 69619/83**

(43) Date of publication of application:
**15.08.84 Bulletin 84/33**

(45) Publication of the grant of the patent:
**02.05.90 Bulletin 90/18**

(84) Designated Contracting States:
**DE FR GB IT**

(56) References cited:
**GB-A-2 064 848**
**GB-A-2 101 792**
**NL-A-7 920 100**

**JAPANESE JOURNAL OF APPLIED PHYSICS,
vol. 19, no. 12, December 1980, pages L731-
L734, Tokyo, JP; NOBUTAKE IMAMURA et al.:
"Experimental study on magneto-optical disk
exerciser with the laser diode and amorphous
magnetic thin films"**

(73) Proprietor: **SHARP KABUSHIKI KAISHA
22-22 Nagaike-cho Abeno-ku
Osaka 545 (JP)**

(72) Inventor: **Fujii Yoshikazu
6-36 Chiyogaoka 2-chome
Nara-shi Nara-ken (JP)**
Inventor: **Deguchi, Toshihisa
Daiyahaitsu gakuenmae C-722 200-5
Gakuendaiwa-cho
2-chome Nara-shi, Nara-ken (JP)**
Inventor: **Inui, Tetsuya
14 Inyo-cho
Nara-shi Nara-ken (JP)**
Inventor: **Yamaoka, Hideyoshi
2-5-21 Amaminishi
Matsubara-shi Osaka-fu (JP)**

(74) Representative: **Wright, Peter David John et al
R.G.C. Jenkins & Co. 26 Caxton Street
London SW1H 0RJ (GB)**

**EP  0 115 666  B1**

(56) References cited:
PATENTS ABSTRACTS OF JAPAN, vol. 6, no.
206 (P-149)(1084), October 19, 1982; & JP - A - 57
113 431

PATENTS ABSTRACTS OF JAPAN, vol. 9, no. 2
(P-325)(1725), January 8, 1985; & JP - A - 59 152
503

## Description

The present invention relates to an optical focus position control device for an optical disc apparatus that records, plays back, and/or erases information on a recording medium which includes a magnetic film by irradiation of the magnetic film with an optical beam such as laser beams.

The surface of existing optical discs can often vibrate during rotation, and as a result, recording tracks on the disc become displaced in the direction of the optical axis of the incident laser beams that irradiate the disc surface. Also, any deviation between the centre position of the disc and the motor shaft that drives the disc will result in the recording tracks of such a disc being displaced in the direction of the disc radius (hereinafter called the radial direction). To enable the incident laser beam spot to correctly match the recording tracks of a disc a device is provided within the optical head mechanism so that the laser beam focus position can be correctly lined up. Such a device is referred to as an optical focus position control device in the following description.

In order to finely adjust the focus position of the incident laser beam to compensate for disc displacement in the direction of the optical axis of the incident laser beam, a device that can vary the position of the objective lens by electromagnetic drive means (hereinafter called the focus controller) is well known in existing optical disc apparatuses such as one that only plays back information from a medium which does not contain any magnetic film, or one that can record additional information. To finely adjust the focus position of the incident laser beam to compensate for displacement in the radial direction, a variety of mechanisms (hereinafter called tracking controllers) that can alter the focus position of the incident laser beams, for instance via a rotary mirror that reflects the incident laser beam in optimum direction, have been used. On the other hand, a new proposal has been introduced quite recently, which provides a mechanism capable of jointly performing both the focus and tracking controls mentioned above, by varying the position of the objective lens via electromagnetic forces. Basically, this mechanism comprises a coil that can be moved integrally with an objective lens, and a stationary permanent magnet, thus enabling the objective lens to be displaced by the electromagnetic force generated when a current flows through said coil.

Japanese Patent Publication 57-113431 discloses one example of such a mechanism. In this known arrangement the objective lens is held in a mounting attached to a cylinder which carries a movable coil extending axially through an annular gap in a magnetic circuit formed by a circular magnet and circular yokes. The lens is by this means driven axially for focus control by electromagnetic forces. Lateral drive for tracking control is also by electromagnetic forces.

However, when such a known mechanism capable of jointly performing both the focus and tracking controls by varying the position of the objective lens using electromagnetic forces is applied to an optical disc apparatus, it readily creates problems as described below.

Since the proposed mechanism uses magnetism generated by a permanent magnet, a leakage magnetism of flux will be generated in positions peripheral to the disc. Consequentially, since the disc uses magnetic film for the recording medium, such leakage magnetism will adversely affect said magnetic film, and the following problems may arise:—

(1) When the magnetic optical disc is irradiated by the laser beams to cause a temperature rise, and simultaneously record information on said disc via external magnetism, if a leakage magnetism from the optical focus position control device is present it may affect the disc, and the quality of the recorded information will be significantly degraded.

(2) When playing back recorded information via the magnetic-optical effect by irradiating the magnetic optical disc with laser beams, any leakage flux from the optical focus position control device may adversely affect the disc, causing the recorded information to be easily erased.

In the light of these potential disadvantages, when an optical disc apparatus is used, it is necessary to minimise the affect of leakage flux from the optical focus position control device on the optical disc.

In addition, there are further problems which may arise. For example, when using a mechanism incorporating an objective lens-mirror cylinder which is supported by a rubber-elastic material one end of which is secured to a stationary holder, said objective lens-mirror cylinder can be driven by the electromagnetic force generated between the coil secured to said objective lens-mirror cylinder and the magnetic circuit secured to said stationary holder. The rubber-elastic material cannot fully resist any tilting movement of the objective lens-mirror cylinder and, as a result, an additional force may be generated when the electromagnetic force is not applied exactly to the gravity centre of the objective lens-mirror cylinder, thus eventually causing the cylinder to generate a rotary movement. This will cause the optical axis of the laser beams to tilt relative to the central axis of the objective lens, and so either off-axis astigmatism or coma aberration may occur and adversely affect the disc tracks containing information, because the beams are poorly focussed on them, and as a result, the quality of the recorded information will be significantly degraded.

The present invention aims to provide an improved mechanism for an optical focus position control device by minimising any adverse effect of leakage magnetism on the optical disc.

According to the invention there is provided an optical focus position control device for an optical disc apparatus that records, plays back, and/or erases information on a recording medium which includes a magnetic film by irradiation of said magnetic film with an optical beam, such as a laser beam, said optical focus position control device comprising a focussing controller operable to move the position of the optical focus of the beam in the focussing direction, that is in a direction transverse the film, the focussing controller comprising:

a closed magnetic circuit which includes a permanent magnet, a yoke plate, a yoke and a magnetic space between said yoke plate and yoke, and;

a drive coil arranged to move in said magnetic space;

characterised in that the magnetic circuit is arranged to lie close to the recording medium so that the part of the magnetic circuit closest to the recording medium includes the magnetic space.

A preferred embodiment of the invention will now be described by way of example, and with reference to the accompanying drawings, in which:

Figure 1 shows a simplified block diagram of an optical disc apparatus;

Figure 2 shows a sectional view of an optical focus position controller in accordance with the present invention;

Figures 3a and 3b are sectional views respectively of a focussing controller in accordance with the present invention and of a known focussing controller;

Figures 4a and 4b are sectional views respectively of a tracking controller in accordance with the present invention and of a known tracking controller;

Figures 5a and 5b are sectional views of two combinations of focussing and tracking controllers;

Figure 6 shows a plan view of an optical focus position control device in accordance with the present invention;

Figure 7 shows a sectional view of an optical focus position control device incorporating a first means for properly dealing with damping characteristics in accordance with the present invention;

Figure 8 shows a plan view of an optical focus position control device incorporating a second means for properly dealing with damping characteristics in accordance with the present invention;

Figure 9 also shows a plan view of an optical focus position control device incorporating a third means for properly dealing with the damping characteristics in accordance with the present invention; and

Figure 10 also shows a plan view of an optical focus position control device incorporating a fourth means for properly dealing with the damping characteristics in accordance with the present invention.

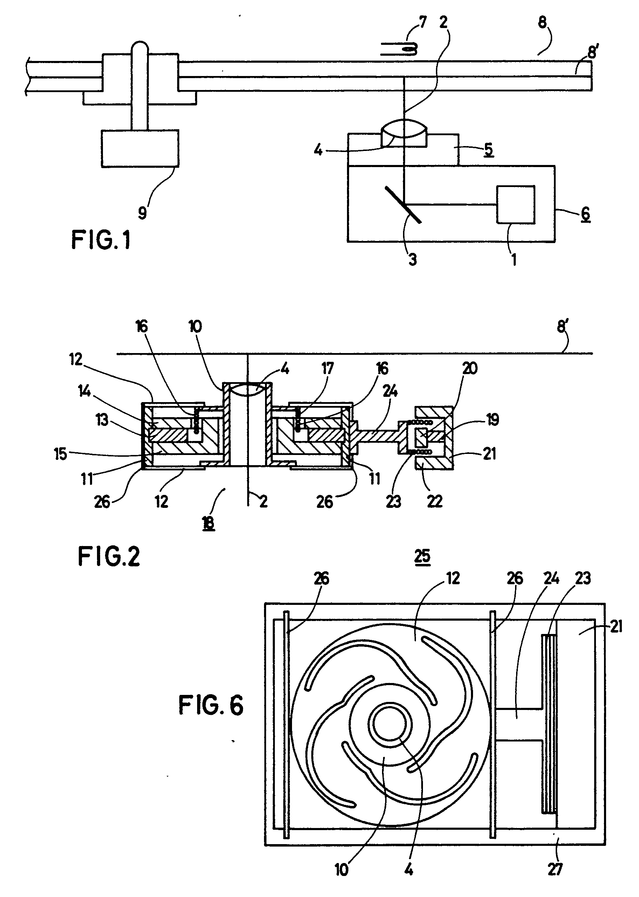

In Figure 1, symbol 1 denotes a laser beam source that emits laser beams 2. Symbol 3 denotes a mirror, and symbol 4 denotes an objective lens that causes the laser beam 2 to be focused onto the recording medium surface of a disc. Symbol 5 denotes an optical focus position control device that causes the optical focus position to be accurately positioned with respect to the tracks of the recording medium of a disc by driving an objective lens 4 either in the vertical (up/down) or horizontal (left/right) direction. Symbol 6 denotes an optical head that contains all the optical devices mentioned above. Symbol 7 denotes a recording/erasing coil that applies a magnetic field to the surface of the disc recording medium while either recording or erasing information. Symbol 8 denotes an optical disc incorporating a disc recording medium 8', and symbol 9 denotes a motor that drives said optical disc to rotate.

The focus control to be performed by said optical focus position control device 5, i.e., a fine adjustment of the incident laser beam focus position in order to deal with the disc displacement in the direction of the incident laser beam axis, can be achieved by causing the objective lens 4 to move in the direction of the thickness of said optical disc 8. On the other hand, the tracking control to be performed by said optical focus position control device 5, i.e., a fine adjustment of the incident laser beam focus position in order to deal with the disc displacement in the radial direction, can be performed by causing the objective lens 4 to move in the radial direction of the optical disc 8.

First, the focus controller will be described. In Figure 2, symbol 10 denotes a lens-mirror cylinder containing and supporting an objective lens 4, where said lens-mirror cylinder 10 is installed in a holder 11 in such a way that it can be vertically moved due to the elastic material 12 which is deflectable in the direction of the axis of the incident laser beam.

Symbol 13 denotes a focussing permanent magnet, symbol 14 denotes a focussing yoke plate, and symbol 15 denotes a focussing yoke, which are all securely attached to the holder 11. Together, these three elements make up a closed magnetic circuit including a magnetic space 16 between said focussing yoke plate 14 and focussing yoke 15. Symbol 17 denotes a focus driving coil, which is attached to the lens-mirror cylinder and crosses said magnetic space 16. If the focus control current is fed to said focus driving coil 17, magnetism will be generated in said coil 17, and as a result, due to interaction with the magnetism generated by the focussing permanent magnet 13, the focus driving coil 17, lens-mirror cylinder 10, and the objective lens 4, will be displaced in the direction of the incident laser beam axis. These elements make up the focus controller 18.

The structre of the tracking controller will now be described. Symbol 19 denotes a permenent magnet, symbol 20 denotes a yoke plate and symbol 21 denotes a yoke available for the tracking operation. These elements are securely attached to a stationary holder (not illustrated) that fully supports the optical focus position control device. Together these make up a closed magnetic circuit which includes a magnetic space 22 between said yoke plate 20 and yoke 21.

Symbol 23 denotes a radial driving coil, which is securely fixed onto the radial drive coil holder 24 and crosses said magnetic space 22. As shown in the drawing, said radial drive coil holder 24 is connected to the focus controller 18. Since the focus controller 18 is movable in the radial direction due to elastic material (not illustrated), if the tracking control current is fed to said radial drive coil 23, magnetism will be generated by said coil 23, and as a result, due to interaction with the magnetism generated by the permanent magnet 19 that is used for the tracking operation, the focus controller 18 will be displaced in the radial direction. These elements make up the tracking controller 25.

A variety of means are provided for effectively preventing the leakage magnetism of the optical focus position control device, comprising said focus controller 18, and tracking controller 25, from causing adverse effects on the recording medium 8 of the optical disc. Such means are described below:—

(1) Details of means related to the focus controller.

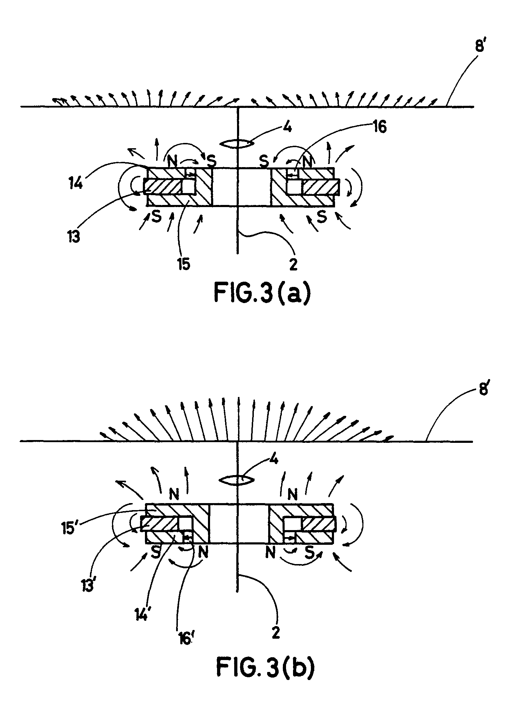

Figure 3a shows a sectional view of a focus controller incorporating improvements in accordance with the present invention, whereas Figure 3b shows a sectional view of a focus controller of the kind as disclosed in Japanese Patent Publication No. 57-113431, which does not incorporate the improved means. Symbols N and S respectively denote the north and south poles. As shown in Figure 3a, the focus controller incorporating improved means provides the magnetic space 16 available for the focussing operation in an area close to the optical disc. This construction minimises leakage magnetism that would otherwise adversely affect the recording medium 8′ of the optical disc. The leakage magnetism will significantly affect the surface of the recording medium 8′ of the optical disc if said magnetic space 16 for the focussing operation is provided in an area remote from the optical disc as shown in Figure 3b. The length of each arrow in Figures 3a and 3b respectively denotes the intensity of the leakage magnetism at the moment when the focussing operation has just started while the direction of the leakage magnetism is shown by the direction of the arrows.

(2) Details of means related to the tracking controller.

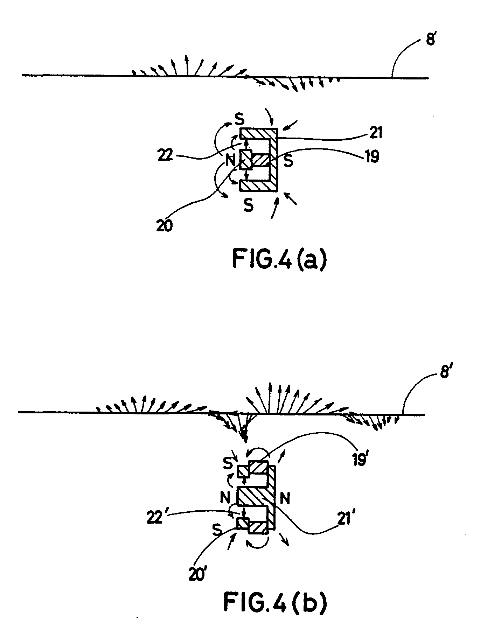

Figure 4a shows a sectional view of the tracking controller incorporating improvements in accordance with the present invention, whereas Figure 4b shows a sectional view of another tracking controller which does not incorporate the improved means. The tracking controller incorporating improved means provides the permanent magnet 19 available for the tracking operation in the centre of the closed magnetic circuit. This construction minimises leakage magnetism that would otherwise adversely affect the recording medium 8′ of the optical disc. In a construction where the permanent magnet 19′ available for the tracking operation is provided encircling the closed magnetic circuit, if the magnitude of the magnetic field that functions in the magnetic space 22′ is designed to be equal to that in the magnetic space 22 of Figure 4a available for the tracking operation, the leakage magnetism will significantly affect the surface of the recording medium 8′ of the optical disc.

(3) Details of means related to both the focussing and tracking controllers.

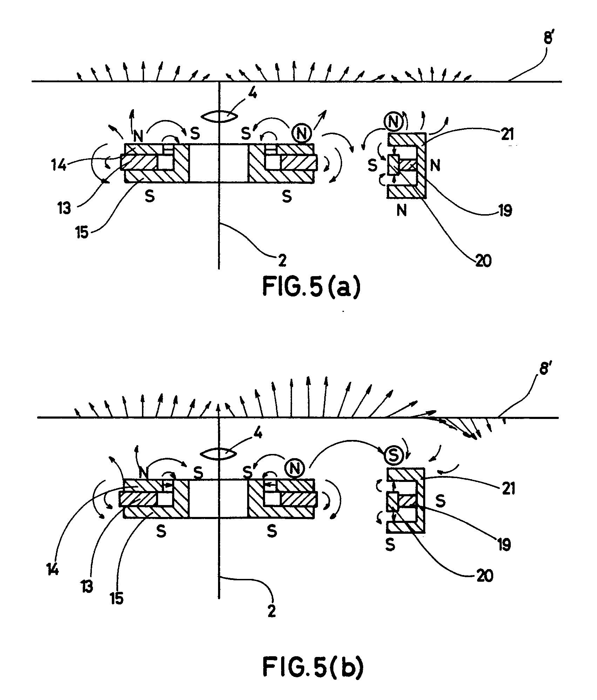

Figure 5a shows sectional views of both the focussing and tracking controllers in a combination incorporating improvements in accordance with the present invention, whereas Figure 5b shows sectional views of both the focussing and tracking controllers in a combination which does not incorporate such improvements. As shown in Figure 5, both the focussing and tracking controllers with the improved means are set in positions close to each other, and the magnetic poles of the focussing yoke plate 14 and of the tracking yoke 21 which are the portions of the closed magnetic circuits of the focussing and tracking controllers which are both closest to each other and disposed to be closest to the disc, are of the same polarity i.e., poles N and N face each other, as shown in Figure 5a. On the other hand, the example shown in Figure 5b illustrates that the magnetic poles of the focussing and tracking controllers which do not incorporate the Figure 5a improvement are set in positions close to each other, but the magnetic poles of the focussing yoke plate 14 which is set close to the optical disc, and the tracking yoke 21 are of the opposite polarity, i.e., poles N and S face each other. In this case, the magnitude of the leakage magnetism adversely affecting the surface of the recording medium 8′ of the optical disc is double the leakage magnetism in the device shown in Figure 5a.

In addition to the improved constructions described above, any adverse effect of the leakage magnetism on the surface of the recording medium 8′ of the optical disc can be reduced further by additionally providing the following means including (a) a construction that provides a highly permeable magnetic substance such as permalloy in a position facing the optical disc of the optical focus position control device, (b) a construction that includes the entire optical focus position control device in said highly permeable magnetic substance, (c) a construction that includes a holder made of said highly permeable magnetic substance for supporting the entire optical focus position control device, and (d) a construction that includes both the focussing and tracking controllers within said highly permeable magnetic substance.

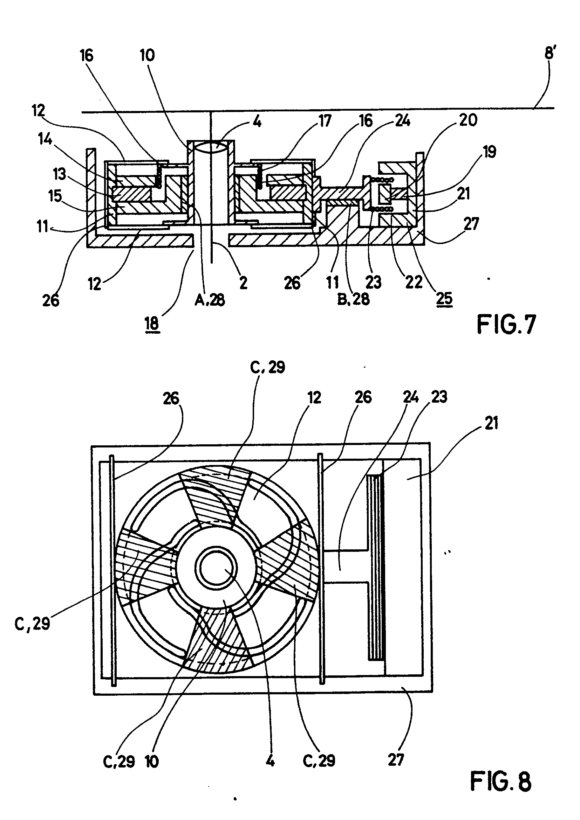

Figure 6 shows a plan view of the optical focus position control device shown in Figure 2. As shown in the drawing, an objective lens mirror cylinder 10 is provided in such a way that it can be moved only in the dual axes directions, i.e., either in the vertical (up/down) or horizontal (left/right) directions since it is supported by the vertically workable elastic material 12 that moves in the focussing direction and by the horizontally workable elastic material 26 that moves in the radial direction. This construction prevents the objective lens from even the slightest incline.

A focussing drive coil 17 is provided in such a way that it can only move in the direction across the focussing magnetic space 16, while a radial drive coil 23 is provided so that it can only move in the direction across the tracking magnetic space 22. As a result, the magnetic space necessary for both the focussing and tracking operations can be extremely narrow, and so the electromagnetic force is used very effectively. This allows the size of the permanent magnet to be significantly reduced, and as a result, an extremely compact optical focus control device can be achieved.

Next, the movement characteristics of both the focussing and tracking controllers of the objective lens 10 will be described below:—

(1) Movement characteristics of the focussing controller.

As shown in Figures 2 and 6, the focussing controller is driven by the electromagnetic effect which results from the interaction between the focussing closed magnetic circuit secured to the interim holder 11, and the focussing drive coil 17 secured to the objective lens mirror cylinder 10.

Said interim holder 11 and the objective lens mirror cylinder 10 are connected to each other via elastic material that is movable only in the vertical direction i.e. in the direction of focussing, for instance by parallel spring 12 that can be moved in the direction of focussing.

Assuming that the weight of the movable part in the direction of focussing which includes the objective lens 4, objective lens mirror cylinder 10, and the driving coil 17 for focussing operation is $M_F$, and the vertical spring constant of the parallel spring 12 moving in the direction of focussing is $K_F$, then the vertical movement of the objective lens mirror cylinder 10 will have a resonance frequency which is represented by the formula

$$f_F = \frac{1}{2\pi} \sqrt{\frac{K_F}{M_F}}$$

When a driving force for the focussing operation is provided by the induced electromagnetic force, the phase delay in the movement for a displacement $X_F$ of the objective lens mirror 10 in the focussing direction varies from 0° to 90° when $0 < f < f_F$, (where f (Hz) represents a frequency) whereas the delay will vary from 90° to 180° when $f_F < f$, and it will be exactly 180° when $f_F \ll f$. As a result, if the focussing target position is $Y_F$, by advancing the phase of the signal representing the focussing drive force $F_F$ by means of a phase advancing compensation circuit, the movement phase delay for the displacement $X_F$ of the focus direction moving part can be adjusted to any desired level below 180°. This ensures very stable focus control operation.

(2) Movement characterisics of the tracking controller.

As shown in Figures 2 and 6, the tracking controller is driven by the electromagnetic effect that results from the interaction between the closed magnetic circuit secured to the stationary holder 27 and the tracking drive coil 23 on the tracking drive coil holder 24 which is secured to the interim holder 11. Said stationary holder 27 and the interim holder 11 are connected to each other by elastic material that is movable only to the left and to the right, i.e. in the radial direction, for instance by a parallel spring coupling 26 that moves in the direction of the disc radius. Assuming that the weight of the focussing controller 18 is $M_T$ and the spring constant of the parallel spring 26 moving in the direction of the disc radius is $K_T$, then the radial movement of the objective lens mirror cylinder 10 will have a resonance frequency (hereinafter called the primary resonance frequency) $f_T$ which is represented by the formula

$$f_T = \frac{1}{2\pi} \sqrt{\frac{K_T}{M_T}}$$

The interim holder 11 and the objective lens mirror cylinder 10 are connected to each other by the parallel spring coupling 12 which moves in the direction of focussing. However, this parallel spring 12 will move to the left and to the right to a certain extent due to its elasticity. Thus, assuming that the spring constant of the focus direction parallel spring 12 is $K'_F$ when it moves in a radial direction and it causes the objective lens mirror cylinder 10 move to the left and right, the spring will have a resonance frequency (hereinafter called the secondary resonance frequency) represented by

$$f'_T = \frac{1}{2\pi} \sqrt{\frac{K'_F}{M'_F}}$$

As described above, whenever the objective lens mirror cylinder 10 moves to the left and right, both primary and secondary resonance frequencies will occur. Note that the spring constant $K'_F$ of the parallel spring that moves in the focussing direction is significantly large when the spring moves to the left and right, i.e. $K'_F \gg K_T$. This means that the secondary resonance frequency $f'_T$ is significantly higher than the primary resonance frequency $f_T$, i.e. $f'_T \gg f'_T$. When the tracking drive force $F_T$ is generated by the induced electromagnetic force mentioned above with a frequency denoted by f, the movement phase delay in the displacement $X_T$ of the objective lens mirror cylinder 10 in the tracking direction varies from 0° to 90° when $0 < f < f_T$, or from 90° to 270° when $f_T < f < f'_T$, or from 270° to 360° when $f'_T < f$.

When the tracking drive force $F_T$ is generated, the phase delay in the movement in the displacement $S_T$ of the objective lens mirror cylinder 10 moving to the tracking target position $Y_T$ should remain below 180° throughout the frequency band of the tracking control signal. As described earlier, even if the phase advancing compensation circuit is used to advance the phase of the tracking drive signal $F_T$, since there is a certain limit for advancing the phase amount, the phase cannot be compensated for in order that it can exceed 180° significantly. In order to properly compensate for the phase delay, the second resonance frequency $f'_T$ should be at an optimum level above the frequency band of the tracking control signal. Although the frequency band used for the tracking control signal can vary, generally an optical disc apparatus uses frequencies within the range 1 to 4 KHz. Experiment has shown that consequently the secondary resonance frequency $f'_T$ should be set at a level of above 8 KHz. Means for designing a construction that fully satisfies the above conditions are described below.

As described above, the secondary resonance frequency $f'_T$ depends on the spring constant $K'_F$ of the parallel spring 12 when it moves to the left and right and on the weight $M_F$ of the parts which move in the focussing direction. Since there is a limit to the amount by which the weight of the objective lens 5 and the lens mirror cylinder 10 can be reduced, the weight $M_F$ of the part moving in the focussing direction cannot be decreased significantly. (Normally, said weight $M_F$ is in the range 0.5 to 10 grams). However, the greater the spring constant $K'_F$, the greater the secondary resonance frequency $f'_T$ will be. The inventors followed up trails for increasing the spring constant $K'_F$ of the parallel spring 12 during its moement to the left and right.

The spring constant $K'_F$ was found to be given by

$$\frac{K'_F}{K_F} = \left(\frac{X_F}{Y_F}\right)^2$$

when the parallel spring 12 has ⊔ width $X_F$ and a thickness $Y_F$. As a result, it is clear that the spring constant $K'_F$ in the horizontal direction (left/right) can be increased by increasing the width $X_F$ and decreasing the thickness $Y_F$ of said parallel spring 12. In the light of the relationship given by

$$\frac{f'_T}{f_T} = \sqrt{\frac{K'_f}{K_f}}$$

the secondary resonance frequency $f'_T$ can be obtained from the equation

$$f'_T = \frac{X_F}{Y_f} \cdot f_F.$$

It was found that the parallel spring 12 moving in the horizontal direction (left/right) should be designed so that it has a thickness of 20 to 50 microns and a width of 50 to 100 times the reference width $Y_F$. If the parallel spring 12 can be correctly designed in accordance with the findings described above, the phase delay of the movement of displacement $X_T$ of the objective lens 4 relative to the tracking target position can be decreased below 180° within the frequency bands available for the tracking control signal. It is important that the phase advancing compensation circuit be used for correctly compensating for the movement phase delay.

According to the results of the trials undertaken by the inventors, very stable focussing and tracking controls were actually achieved by using a parallel spring 12 made from beryllium-copper alloy having between 30 and 50 microns thickness. Nevertheless, since there are two kinds of the resonance frequencies, $f_F$ and $f_T$, if the damping characteristics in the directions of focussing and tracking control remain negligible, the resonance multiple factor in said resonance frequencies will increase, thus readily causing interference vibration to occur during either the focussing or tracking control operation. Also, when a certain frequency above the resonance frequency level is reached, the phase delay in responding to the displacement of the movable parts will be at a value very close to 180°, which will result in an extremely unstable optical focus position control operation. To prevent this and ensure a satisfactory amount of damping the following means are provided:—

(1) Structure of the primary means

Figure 7 shows a sectional view of the optical focus position control device. As shown in the drawing, damping material 28 is held in a space A between the objective lens mirror cylinder 10 and the focussing yoke 15, thus increasing the damping in the focussing direction. Further damping material 28 is held in a space B between the tracking drive coil holder 24 and the stationary holder 27, thus increasing the damping in the direction of the tracking. To make up said damping material 28, viscose-elastic materials such as silicon rubber, butyl rubber, silicon-butyl rubber, and acrylic-ethylene rubber, foaming synthetic resin such as foamed polyurethane, and viscose fluid such as silicon grease, can be used.

(2) Structure of the second means.

Figure 8 shows a plan view of the optical focus position control device incorporating a second means of damping according to the present invention. Parallel spring 12, which moves in the direction of focus, has a structure that connects two concentric circles, whereby two flat sheet springs, each being connected to four arms at the edges, are provided one in each of the upper and lower positions (see Figure 2). Said parallel spring 12 moving in the direction of focus causes the objective lens mirror cylinder 10 to move only in the vertical direction relative to the position of the interim holder 11. Damping material 29 is bonded to the portions C of the surface of said parallel spring 12, where the largest amount of the relative displacement exists, thus resulting in greater damping characteristics in the direction of focus. To make up said damping material 29, viscose-elastic materials, such as silicon-rubber, butyl rubber, silicon-butyl rubber, and acrylic-ethylene rubber, and foaming synthetic resin such as foamed polyurethane, can be used.

(3) Structure of the third means.

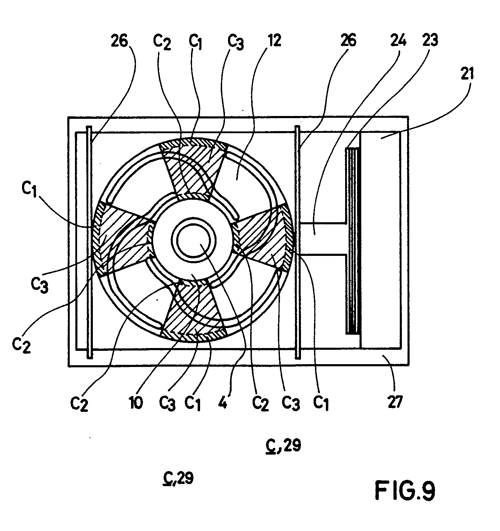

Figure 9 shows a plan view of the optical focus position control device incorporating a third means of damping according to the present invention. Said damping material 29 is bonded to the portions C of the surface of the parallel spring 12, where the largest amount of the relative displacement exists. The damping material 29 is connected to the parallel spring 12 at the edges C1 and C2. Viscose fluid such as silicon grease is charged in the portion C3 located between the edges C1 and C2, thus increasing the damping characterisics in the direction of focus.

(4) Structure of the fourth means.

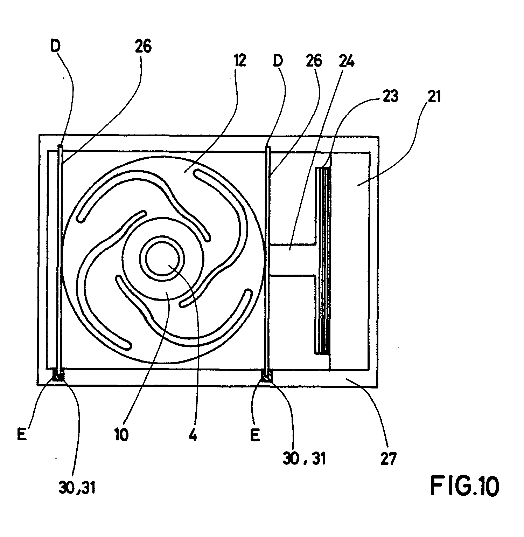

Figure 10 shows a plan view of the optical focus position control device incorporating a fourth means of damping according to the present invention. The parallel springs 26 which move in the tracking direction are secured to the interim holder 11 (see Figure 2) at the centre, whilst also being secured to the stationary holder 27 at both ends. First, one end D is secured to the stationary holder 27, and then the other end E is inserted into a slit 30 of the stationary holder 27, and finally viscose fluids 31 such as silicon grease is charged into said slit 30 to complete the installation of each said parallel spring 26.

In addition to the means described above, there are a variety of other useful means for achieving increased damping such as making up either the focus direction or tracking direction movable parallel springs using vibration-proof alloy such as manganese-copper alloy, ferro-aluminum alloy, nickel-titanium alloy, magnesium alloy, etc. It is also useful to make up said springs by coating latexed acrylic-ethylene rubber over both surfaces of either the focus direction or tracking direction moving parallel spring. (Note that, if a sheet rubber is bonded to a metal spring by an adhesive agent such as primer, it will disadvantageously cause the spring to become stiff and spring constant to increase).

A wide variety of useful means for effectively increasing the damping characteristics have been described above. However, the damping characteristics can be improved further by combining the above means.

The embodiments of the invention thus described with reference to the accompanying drawings will obviously be suggestive of derivations and modifications. For exaple, the focussing and/or tracking means can be applied to any head positioning device for a recording disc, the head being used for recording, playing back or erasing information or for performing any combination of these functions.

**Claims**

1. An optical focus position control device for an optical disc apparatus that records, plays back, and/or erases information on a recording medium (8) which includes a magnetic film by irradiation of said magnetic film with an optical beam, such as a laser beam (2), said optical focus position control device comprising a focussing controller operable to move the position of the optical focus of the beam in the focussing direction, that is in a direction transverse the film, the focussing controller (13—17) comprising:
a closed magnetic ciruit which includes a permanent magnet (13), a yoke plate (14), a yoke (15) and a magnetic space (16) between said yoke plate (14) and yoke (15), and;
a drive coil (17) arranged to move in said magnetic space;
characterised in that the magnetic circuit is arranged to lie close to the recording medium (8) so that the part of the magnetic circuit closest to the recording medium includes the magnetic space (16).

2. An optical focus position controlling device according to Claim 1, wherein said focussing controller includes an intermediate holder (11) and wherein there is also provided a tracking controller (19—24) coupled to said intermediate holder (11) for driving said focussing controller and thereby moving said position of the optical focus of the beam in the tracking direction, that is in a direction parallel to the film.

3. An optical focus position controlling device according to Claim 2 wherein said tracking controller comprises a closed magnetic circuit which includes a permanent magnet (19), a yoke plate (20), a yoke (21) and a magnetic space, and a drive coil (23) arranged to move in said magnetic space, the magnetic circuit being constructed in such a way that the permanent magnet is disposed in a central position in the circuit, that is to say, on the axis of the drive coil.

4. An optical focus position controlling device according to Claim 3 wherein respective portions of the closed magnetic circuits of the focussing and tracking controllers which are both closest to each other and disposed to be closest to the film are of the same magnetic polarity.

5. An optical focus position controlling device according to Claim 4 wherein said respective portions are portions of the focussing controller yoke plate (14) and of the tracking controller yoke (21), respectively.

6. An optical focus controlling device according to any of Claims 2 to 5 wherein said focussing controller is mounted with respect to a stationary holder (27) by way of a first parallel spring coupling (26) arranged to allow the tracking movement of the focussing controller relative to the stationary holder.

7. An optical focus controlling device according to Claim 6 characterised in that said first parallel spring coupling comprises a pair of parallel springs each comprising a metal spring element and latex rubber attached to the surface of said metal spring element.

8. An optical focus controlling device according to Claim 7 wherein said latex rubber is a latex acrylic-ethylene rubber.

9. An optical focus controlling device according to Claim 7 or Claim 8 wherein each said metal spring element of said first parallel spring coupling is made of a vibration-proof alloy.

10. An optical focus controlling device according to Claim 6 chracterised in that said first parallel spring coupling comprises a pair of parallel springs made of a vibration-proof alloy.

11. An optical focus controlling device according to any of Claims 2 to 10 wherein there is provided an objective lens (4) by which the optical beam is focussed and a cylindrical holder (10) in which the lens is mounted, said cylindrical holder being connected to the focusing controller drive coil (17), and being coupled to the intermediate holder (11) by way of a second parallel spring coupling (12) arranged to allow movement of the cylindrical holder relative to the intermediate holder in the focussing direction.

12. An optical focus controlling device according to Claim 11 characterised in that said second parallel spring coupling comprises a pair of parallel springs each comprising a metal spring element and latex rubber attached to the surface of said metal spring element.

13. A focussing device according to Claim 11 wherein said latex rubber is a latex acrylic-ethylene rubber.

14. An optical focus controlling device according to Claim 12 or Claim 13 wherein each said metal spring element of said second parallel spring coupling is made of a vibration-proof alloy.

15. An optical focus controlling device according to Claim 11 characterised in that said second parallel spring coupling comprises a pair of parallel springs made of a vibration-proof alloy.

16. An optical focus position controlling device according to Claim 6, further including elastic material (29) bonded to said first parallel spring coupling for improving the damping characteristics thereof.

17. An optical focus position controlling device according to Claim 11, further including elastic material bonded to said second parallel spring coupling for improving the damping characteristics thereof.

**Patentansprüche**

1. Vorrichtung zur Einstellung der optischen Fokussierung bei einem Gerät mit optischer Scheibe das auf einem eine dünnen magnetische Schicht aufweisenden Aufnahmemedium (8) Informationen durch Bestrahlen der Schicht mit einem optischen Strahl, beispielsweise einem Laserstrahl (2) aufnehmen, abspielen und/oder löschen kann, die eine den Brennpunkt des optischen Strahls in Richtung der Fokussierung senkrecht zur Schicht bewegende Brennpunkteinstellung (13—17) mit folgenden Elementen aufweist:

einen geschlossenen magnetischen Schaltkreis, mit einem Dauermagneten (13), einer Jochplatte (14), einem Joch (15), einem Magnetspalt (16) zwischen der Jochplatte (14) und dem Joch (15) sowie

eine im Magnetspalt (16) bewegbare Antriebsspule (17),

dadurch gekennzeichnet, daß der magnetische Schalkreis so angeordnet ist, daß er dicht am Aufnahmemedium (8) liegt, und daß der Teil, welcher am dichtesten zum Aufnahmemedium liegt, den Magnetspalt (16) aufweist.

2. Vorrichtung nach Anspruch 1, dadurch gekennzeichnet, daß die Brennpunkteinstellung einen Zwischenhalter (11) einschließt, und daß eine mit diesem verbundene Spureinstellung (19—24) vorgesehen ist, die die Brennpunkteinstellung entreiebt und dabei den Brennpunkt des Strahls in Richtung der Spureinstellung, das heißt, parallel zur magnetischen Schicht, bewegt.

3. Vorrichtung nach Anspruch 1 oder 2, dadurch gekennzeichnet, daß die Vorrichtung zur Spureinstellung einen Dauermagneten (19), eine Jochplatte (20), ein Joch (21), einen Magnetspalt und eine im Magnetspalt bewegliche Antriebsspule (23) aufweist, und daß der magnetische Schaltkreis so aufgebaut ist, daß der Dauermagnet in einer zentralen Position, das heißt, auf der Achse der Antriebsspule angebracht ist.

4. Vorrichtung nach einem der Ansprüche 1 bis 3, dadurch gekennzeichnet, daß die Teile der magnetischen Schaltkreise der Brennpunkt- und Spureinstellung, welche sich am nächsten sind und welche auch am nächsten zur magnetischen Schicht liegen, die gleiche magnetische Polarität haben.

5. Vorrichtung nach Anspruch 4, dadurch gekennzeichnet, daß die Teile der geschlossenen magnetischen Schaltkreise der Brennpunkt- und Spureinstellung, die am nächsten zueinander und zur Schicht liegen, Bereiche der Jochplatte (14) der Brennpunkteinstellung und Bereiche des Jochs (21) der Spureinstellung umfassen.

6. Vorrichtung nach einem der Ansprüche 2 bis 5, dadurch gekennzeichnet, daß die Brennpunktsteuerung so durch eine erste parallele Federkopplung (26) mit der stationären Halterung (27) verbunden ist, daß eine Bewegung zur Spureinstellung der Brennpunktstellung gegenüber der stationären Halterung möglich ist.

7. Vorrichtung nach Anspruch 6, dadurch gekennzeichnet, daß die erste Federkopplung ein Paar paralleler Federn umfaßt, die ein metallisches Federelement und Latexgummi aufweisen, das auf der Oberfläche des metallischen Federelements angebracht ist.

8. Vorrichtung nach Anspruch 7, dadurch gekennzeichnet, daß das Latexgummi ein Latex-Acryläthylen-Gummi ist.

9. Vorrichtung nach Anspruch 7 oder 8, dadurch gekennzeichnet, daß die metallischen Federelemente der parallelen Federkopplung, aus einer vibrationsmindernden Legierung bestehen.

10. Vorrichtung nach Anspruch 6, dadurch gekennzeichnet, daß die erste parallele Federkopplung ein Paar Federn aus einer vibrationssicheren Legierung umfaßt.

11. Vorrichtung nach einem der Ansprüche 2 bis 10, dadurch gekennzeichnet, daß eine optische Linse (4) durch die der optische Strahl gebündelt wird, sowie eine zylindrische Halterung (10) vorgesehen sind, in der die Linse angebracht ist, daß der Zylinder mit der Antriebsspule (17) der Brennpunksteuerung verbunden und mit dem Zwischenhalter (11) über eine zweite parallele Federkopplung (12) gekoppelt ist, so daß die zylinderische Halterung gegenüber dem Zwischenhalter in Richtung der Fokussierung bewegbar ist.

12. Vorrichtung nach Anspruch 11, dadurch gekennzeichnet, daß die zweite parallele Federkopplung ein Paar parallele Federn aufweist, die ein metallisches Federelement und auf dessen Oberfläche befestigtes Latexgummi umfaßt.

13. Vorrichtung nach Anspruch 12, dadurch gekennzeichnet, daß als Latexgummi ein Latex-Acryläthylen-Gummi verwendbar ist.

14. Vorrichtung nach Anspruch 12 oder 13, dadurch gekennzeichnet, daß das Metallelement der zweiten Federkopplung aus einer vibrationsmindernden Legierung besteht.

15. Vorrichtung nach Anspruch 11, dadurch gekennzeichnet ist, daß die zweite parallele Federkopplung ein Paar Federn aus einer vibrationsmindernden Legierung umfaßt.

16. Vorrichtung nach Anspruch 6, dadurch gekennzeichnet, daß an der ersten parallelen Federkopplung zur Verbesserung der Dämpfungseigenschaften elastisches Material angebracht ist.

17. Vorrichtung nach Anspruch 11, dadurch gekennzeichnet, daß an der zweiten parallelen Federkopplung zur Verbesserung der Dämpfungseigenschaften elastisches Material angebracht ist.

## Revendications

1. Dispositif de commande du positionnement de la focalisation optique destiné à un appareil à disque optique qui enregistre, reproduit et/ou efface des informations sur un support d'enregistrement (8) qui comporte un film magnétique par irradiation dudit film magnétique à l'aide d'un faisceau optique, tel qu'un faisceau laser (1), ledit dispositif de commande du positionnement de la focalisation optique comprenant un contrôleur de focalisation apte à déplacer la position de la focalisation optique du faisceau dans la direction de la focalisation, c'est-à-dire dans une direction transversale par rapport au film, le contrôleur de focalisation (13—17) comprenant:

un circuit magnétique fermé qui comporte un aimant permanent (13), une plaque (14) de culasse, une culasse (15) et un espace magnétique (16) entre ladite plaque (14) de culasse et ladite culasse (15), et;

une bobine de commande (17) disposée de manière à se déplacer dans ledit espace magnétique;

caractérisé en ce que le circuit magnétique est disposé à proximité du support d'enregistrement (8) de manière à ce que la partie du circuit magnétique la plus proche du support d'enregistrement comporte l'espace magnétique (16).

2. Dispositif de commande du positionnement de la focalisation optique selon la revendication 1, dans lequel ledit contrôleur de focalisation comporte un support intermédiaire (11) et dans lequel est également prévu un contrôleur d'alignement (19—24) relié audit support intemédiaire (11) pour commander ledit contrôleur de focalisation et déplacer ainsi ladite position de la focalisation optique du faisceau dans la direction d'alignment, c'est-à-dire dans une direction parallèle au film.

3. Dispositif de commande du positionnement de la focalisation optique selon la revendication 2, dans lequel ledit contrôleur d'alignment comporte un circuit magnétique fermé qui comprend un aimant permanent (19), une plaque (20) de culasse, une culasse (21) et un espace magnétique, ainsi qu'une bobine de commande (23) disposée de manière à se déplacer dans ledit espace magnétique, le circuit magnétique étant construit de telle manière que l'aimant permanent soit disposé dans une position central dans le circuit, c'est-à-dire sur l'axe de la bobine de commande.

4. Dispositif de commande du positionnement de la focalisation optique selon la revendication 3, dans lequel lesdites parties respectives des circuits magnétiques fermées des contrôleurs de focalisation et d'alignement qui sont à la fois les plus proches l'une de l'autre et les plus proches du film ont la même polarité magnétique.

5. Dispositif de commande du positionnement de la focalisation optique selon la revendication 4, dans lequel lesdites parties respectives sont des parties de la plaque (14) de culasse du contrôleur de focalisation et de la culasse (21) du contrôleur d'alignment, respectivement.

6. Dispositif de commande de la focalisation optique selon l'une quelconque des revendications 2 à 5, dans lequel ledit contrôleur de focalisation est monté, relativement à un support fixe (27), au moyen d'un premier couplage à ressorts parallèles (26) disposé de manière à permettre le mouvement d'alignement du contrôleur de focalisation par rapport au support fixe.

7. Dispositif de commande de la focalisation optique selon la revendication 6, caractérisé en ce que ledit premier couplage à ressorts parallèles comprend une paire de ressorts parallèles se composant chacun d'un élément de ressort en métal et de caoutchouc latex fixé à la surface dudit élément de ressort en métal.

8. Dispositif de commande de la focalisation optique selon la revendication 7, dans lequel ledit caoutchouc latex est un caoutchouc latex éthylène-acrylique.

9. Dispositif de commande de la focalisation optique selon la revendication 7 ou la revendication 8, dans lequel chacun desdits éléments à ressort en métal.dudit premier couplage à ressorts parallèles est réalisé en un alliage à l'épreuve des vibrations.

10. Dispositif de commande de la focalisation optique selon la revendication 6, caractérisé en ce que ledit premier coplage à ressorts parallèles comprend une paire de ressorts parallèles réalisés en un alliage à l'épreuve des vibrations.

11. Dispositif de commande de la focalisation optique selon l'une quelconque des revendications 2 à 10, dans lequel sont prévus une lentille d'objectif (4) par laquelle le faisceau optique est focalisé et un support cylindrique (10) dans lequel est montée la lentille, ledit support cylindrique étant relié à la bobine de commande (17) du contrôleur de focalisation ainsi qu'au support intermédiaire (11) au moyen d'un second couplage (12) à ressorts parallèles disposé de manière à permettre le mouvement du support cylindique par rapport au support intermédiaire dans la direction de focalisation.

12. Dispositif de commande de la focalisation optique selon la revendication 11, caractérisé en ce que ledit second couplage à ressorts parallèles comprend une paire de ressorts parallèles se composant chacun d'un élément de ressort en métal et de caoutchouc latex fixé à la surface dudit élément de ressort en métal.

13. Dispositif de focalisation selon la revendication 11, dans lequel ledit caoutchouc latex est un caoutchouc latex éthylène-acrylique.

14. Dispositif de commande de la focalisation optique selon la revendication 12 ou la revendication 13, dans lequel chacun desdits éléments à ressort en métal dudit second couplage à ressorts parallèles est réalisé en un alliage à l'épreuve des vibrations.

15. Dispositif de commande de la focalisation optique selon la revendication 11, caractérisé en ce que ledit second couplage à ressorts parallèles comprend une paire de ressorts parallèles réalisés en un alliage à l'épreuve des vibrations.

16. Dispositif de commande du positionnement de la focalisation optique selon la revendication 6, comprenant en outre un matériau élastique (29) uni audit premier couplage à ressorts parallèles pour en améliorer les caractéristiques d'amortissement.

17. Dispositif de commande du positionnement de la focalisation optique selon la revendication 11, comprenant en outre un matériau élastique uni audit second couplage à ressorts parallèles pour en améliorer les caractèristiques d'amortissement.

**FIG.1**

**FIG.2**

**FIG.6**

FIG.3(a)

FIG.3(b)

2

FIG.4 (a)

FIG.4 (b)

FIG.5(a)

FIG.5(b)

FIG.7

FIG. 8

FIG.9

FIG.10